# EUROPÄISCHE PATENTANMELDUNG

(11) **EP 4 154 774 A1**
(43) Veröffentlichungstag der Anmeldung: **29.03.2023**
(21) Anmeldenummer: 22196687.2
(22) Anmeldetag: 20.09.2022
(51) Int. Cl.: A47J 31/42, A47J 42/50

(54) **AUFSATZ FÜR EINE KAFFEEMASCHINE**

(30) Priorität: 28.09.2021 DE 102021125160
(71) Anmelder: SAR Elektronic GmbH, 84130 Dingolfing (DE)
(72) Erfinder: Rohrmoser, Harald, 85356 Freising (DE); Rainer, Johann, 84164 Moosthenning (DE)
(74) Vertreter: Lichtnecker, Markus Christoph

(57) **Zusammenfassung**

Die Erfindung betrifft einen Aufsatz (10) für eine Kaffeemaschine, vorzugsweise Kaffeevollautomat, aufweisend wenigstens einen Behälter (12) für Tee, eine Befestigungsvorrichtung (18) zum Befestigen des Aufsatzes an und/oder auf der Kaffeemaschine, und zumindest eine Zuführvorrichtung (20) mit wenigstens einer horizontal oder in Förderrichtung schräg nach unten orientierten Förderschnecke (22) zum Fördern des Tees vom Behälter (12) zur und/oder in die Kaffeemaschine.

## Beschreibung

Die Erfindung betrifft einen Aufsatz für eine Kaffeemaschine, vorzugsweise Kaffeevollautomat.

Es sind Kaffeemaschinen bekannt, mit denen beispielsweise Espresso hergestellt werden kann. Hierbei ist es jedoch nicht möglich, zusätzlich Tee oder teeähnliche Getränke herzustellen.

Es ist daher eine Aufgabe der Erfindung, einen Aufsatz zu schaffen, der es ermöglicht, mit herkömmlichen Kaffeemaschinen auch Tee oder teeähnliche Getränke herzustellen.

Die Lösung dieser Aufgabe erfolgt durch die Vorrichtung, die Verwendung sowie das Verfahren mit den Merkmalen der unabhängigen Ansprüche.

Erfindungsgemäß ist der Aufsatz für eine Kaffeemaschine, vorzugsweise Kaffeevollautomat, z.B. Espresso-Vollautomat, geeignet bzw. kann hierzu verwendet werden.

Es können somit herkömmliche Kaffeemaschinen nachgerüstet werden.

Der Aufsatz zur Teeherstellung weist wenigstens einen Behälter für Tee auf.

Der Begriff Tee ist breit zu verstehen und umfasst beispielsweise Tee und teeähnliche Getränke, zum Beispiel aus Pflanzenteilen, z.B. Teile der Teepflanze, getrocknete Früchte, Kräuter und Gewürze. Auch Blätter, Blüten, z.B. Kamillenblüten oder Malve, und teeähnliche Pflanzenteile, wie z.B. Mate, werden von diesem Begriff erfasst.

Die Teesorte kann hierbei beliebig sein, z.B. Früchtetee, Kräutertee, Gewürztee, Schwarztee, weißer Tee, grüner Tee, Oolong, Pu Erh, Gyokuro, Sencha, Bancha oder Matcha. Neben heißen Tees sind ebenso gekühlte Tees, z.B. Eistees, möglich.

Der Tee kann z.B. als Pulver oder Granulat vorliegen.

Der Aufsatz weist eine Befestigungsvorrichtung zum Befestigen des Aufsatzes an und/oder auf der Kaffeemaschine auf.

Beispielsweise kann der Aufsatz lösbar oder unlösbar, z.B. mittels einer Klebeverbindung, mit der Kaffeemaschine verbunden werden oder verbunden sein.

Auch ein, vorzugsweise formschlüssiges, Aufsetzen stellt eine Befestigung im Sinne der Erfindung dar. Beispielsweise kann hierzu die vorhandene Außenkontur der Kaffeemaschine genutzt werden.

Es handelt sich daher quasi um einen externen Aufsatz, welcher z.B. an herkömmlichen Kaffeemaschinen befestigt werden kann, um diese nachzurüsten. Vorzugsweise ist der Aufsatz kein originärer Bestandteil der Kaffeemaschine.

Der Aufsatz weist zumindest eine Zuführvorrichtung mit wenigstens einer horizontal oder in Förderrichtung schräg nach unten orientierten Förderschnecke zum Fördern des Tees vom Behälter zur und/oder in die Kaffeemaschine, vorzugsweise zu einem Zuführschacht der Kaffeemaschine, auf.

Die Kaffeemaschine weist beispielsweise eine Brühkammer und wenigstens eine Mühle zum Mahlen von Kaffeebohnen sowie einen Zuführschacht auf. Dieser Zuführschacht ist herkömmlich zum Beispiel für die Zuführung von koffeinfreiem Kaffeepulver, z.B. Espressopulver, in die Brühkammer gedacht.

Der Zuführschacht kann zur Zuführung des Tees in die Brühkammer genutzt werden. So kann die Zuführvorrichtung den Tee vom Behälter in den Zuführschacht der Kaffeemaschine fördern.

Der Tee kann in der Brühkammer z.B. im Hochdruck-Brühverfahren gebrüht werden.

Der Tee wird quasi wie ein Espresso gebrüht. Lange Ziehzeiten können auf diese Weise entfallen. So kann der Benutzer den Tee zeitnah trinken.

Die Förderschnecke hat den Vorteil, dass beispielsweise auf einfache Weise eine, z.B. automatische, Dosierung anhand der Umdrehungen erfolgen kann.

Der Aufsatz kann bei einer bestehenden Infrastruktur eingesetzt werden. So wird es ermöglicht, auch mit herkömmlichen Kaffeemaschinen Tee herzustellen.

Durch die so genannte Last-Mile-Production ist kein Transport von schweren Getränkebehältern und/oder Flaschenwaren erforderlich. Ebenso entfällt eine Vorkühlung und/oder eine Kühllagerung. Dadurch wird der CO2-Ausstoß reduziert.

Da beispielsweise loser Tee als Trockenware verwendet wird, kann das Verpackungsmaterial geringer als bei vorkonfektionierten Portionsteebeuteln gehalten werden. Dies ist umweltfreundlicher, zumal Müll, z.B. Teebeutel, Pads oder Kapseln, eingespart wird und eine Entsorgung von Flaschen und/oder Getränkekartons entfällt. Ferner ist kein Leerguttransport erforderlich.

Der Tee ist zudem äußerst frisch, da dieser erst nach einer Bestellung vor dem Benutzer gebrüht wird. Auf Antioxidationsmittel und/oder Haltbarmachung, wie z.B. Pasteurisieren, kann daher verzichtet werden.

Da beispielsweise echter, loser Tee eingesetzt wird, sind keine - geschmacklich nachteiligen - Teeextrakte oder Instant-Tees erforderlich.

Der Benutzer erhält beispielsweise einen Tee mit einem echten, natürlichen Teegeschmack. Durch die kurze Hochdruck-Brühung sind zudem weniger Bitterstoffe enthalten.

Im Gegensatz zu Instant-Tees ist im aufgebrühten Tee weniger Zucker enthalten, da heiße Tees z.B. ungesüßt und/oder Eistees lediglich leicht gesüßt sein können.

Im Vergleich zu z.B. Premium-Teebeuteln, Pyramidenbeuteln oder Eistees als Flaschenware ist der Wareneinsatz geringer und die Marge daher höher.

Ferner ist der Lagerplatz bei losem Tee als Bulk-Ware geringer, wodurch ebenfalls Kosten eingespart werden.

Weiterbildungen der Erfindung sind auch den abhängigen Ansprüchen, der Beschreibung sowie den beigefügten Zeichnungen zu entnehmen.

Gemäß einer Ausführungsform ist die Befestigungsvorrichtung zum lösbaren Befestigen des Aufsatzes an der Kaffeemaschine ausgebildet.

Bei der Befestigungsvorrichtung kann es sich vorzugsweise um eine Einhänge-, Klett-, Klammer-, Klemm-, Steck-, Rast-, Magnet-, Zapfen- und/oder Schraubvorrichtung handeln. Die Befestigung kann vorzugsweise werkzeuglos erfolgen.

Dies ermöglicht eine einfache und schnelle Montage bzw. Demontage des Aufsatzes.

Vorzugsweise ist der Aufsatz durch die Befestigungsvorrichtung an einer Oberseite der Kaffeemaschine befestigbar.

Ist die Befestigungsvorrichtung als Steckvorrichtung ausgebildet, kann der Aufsatz beispielsweise formschlüssig auf die Kaffeemaschine aufgesetzt bzw. aufgesteckt werden.

Nach einer weiteren Ausführungsform ist eine, vorzugsweise elektromagnetische, Antriebsvorrichtung für die Förderschnecke vorgesehen.

Die Antriebsvorrichtung, z.B. ein Motor, kann die Förderschnecke in Rotation versetzen. Dadurch wird der Tee gefördert.

Es kann eine Energieversorgung für die Antriebsvorrichtung vorgesehen sein. Beispielsweise kann dieselbe Energieversorgung wie für die Kaffeemaschine verwendet werden, d.h. Strom kann von der Kaffeemaschine abgezweigt werden. Alternativ kann die Antriebsvorrichtung separat an ein Stromnetz angeschlossen sein. Auch ein Akkumulator und/oder eine Batterie ist denkbar.

Die Antriebsvorrichtung und/oder Energieversorgung kann einen Teil der Zuführvorrichtung bilden oder als separates Bauteil ausgebildet sein.

Gemäß einer weiteren Ausführungsform ist eine Steuerungsvorrichtung vorgesehen, die dazu ausgebildet ist, die Antriebsvorrichtung zu steuern.

Bei der Steuerungsvorrichtung kann es sich vorzugsweise um eine von der Kaffeemaschine separate bzw. übergeordnete Steuerungsvorrichtung handeln. Alternativ kann eine gemeinsame Steuerungsvorrichtung vorgesehen sein.

Die Steuerungsvorrichtung kann die Antriebsvorrichtung beispielsweise derart steuern, dass eine gewünschte Dosierung erfolgt. Zum Beispiel kann die Dosierung anhand der Anzahl an Umdrehungen der Förderschnecke und/oder der Zeit, z.B. der Laufzeit der Antriebsvorrichtung, erfolgen.

Nach einer weiteren Ausführungsform sind mehrere Behälter und mehrere Förderschnecken vorgesehen, wobei jedem Behälter wenigstens oder genau eine separate Förderschnecke zugeordnet ist.

Die Förderschnecken sind vorzugsweise parallel zueinander orientiert.

Vorzugsweise ist jeder Förderschnecke eine separate Antriebsvorrichtung zugeordnet. Die Förderschnecken können somit unabhängig voneinander angetrieben werden.

Gemäß einer weiteren Ausführungsform weist der Behälter einen, vorzugsweise dichtschließenden, Deckel auf.

Durch den Deckel wird der Tee vor Feuchtigkeit und/oder einem "Ausrauchen" geschützt.

Der Deckel wird vorzugsweise lediglich zum Befüllen mit Tee geöffnet. Um das Öffnen des Deckels zu erleichtern, kann der Deckel beispielsweise eine Griffmulde aufweisen.

Nach einer weiteren Ausführungsform ist eine Behälterbefestigungsvorrichtung zum, vorzugsweise lösbaren, Befestigen des Behälters an der Zuführvorrichtung vorgesehen.

Beispielsweise kann der Behälter lösbar oder unlösbar, z.B. mittels einer Klebeverbindung, mit der Zuführvorrichtung verbunden werden oder verbunden sein.

Bei der Behälterbefestigungsvorrichtung kann es sich vorzugsweise um eine Einhänge-, Klett-, Klammer-, Klemm-, Steck-, Rast-, Magnet-, Zapfen- und/oder Schraubvorrichtung handeln. Die Befestigung kann vorzugsweise werkzeuglos erfolgen.

Dies ermöglicht eine einfache und schnelle Montage bzw. Demontage des Behälters.

Vorzugsweise ist der Behälter durch die Behälterbefestigungsvorrichtung an einer Oberseite der Zuführvorrichtung befestigbar.

Nach einer weiteren Ausführungsform weist der Behälter an seiner Unterseite einen Auslass auf.

Der Behälter kann sich vorzugsweise trichterförmig in Richtung des Auslasses verjüngen.

In einem Betriebszustand kann der Auslass offen sein. Tee kann somit durch die Schwerkraft vom Behälter in die Zuführvorrichtung bzw. zur Förderschneck gelangen.

Beispielsweise befindet sich im Betriebszustand permanent Tee im Behälter sowie in der Förderschnecke.

Gemäß einer weiteren Ausführungsform weist der Behälter einen Verschluss zum vorübergehenden Verschließen des Auslasses auf.

Der Verschluss kann z.B. einen Schieber aufweisen. Dieser kann beispielswiese über den Auslass geschoben werden. Der Verschluss kann z.B. in einer Kulissenführung geführt sein.

Der Auslass kann z.B. zum Abnehmen des Behälters geschlossen werden. Dadurch wird z.B. verhindert, dass Teereste ausrieseln.

Beispielsweise kann der Behälter zum Befüllen, Reinigen und/oder Austauschen abgenommen werden.

Die Erfindung betrifft auch eine Kaffeemaschine, vorzugsweise Kaffeevollautomat, mit einem erfindungsgemäßen Aufsatz.

Bei der Kaffeemaschine kann es sich z.B. um einen Espresso-Vollautomaten handeln.

Die Kaffeemaschine weist vorzugsweise eine Brühkammer, z.B. Hochdruck-Brühkammer, und wenigstens eine Mühle zum Mahlen von Kaffeebohnen sowie einen Zuführschacht auf.

Der Zuführschacht kann zur Zuführung des Tees in die Brühkammer genutzt werden. So kann die Zuführvorrichtung den Tee vom Behälter in den Zuführschacht der Kaffeemaschine fördern.

Schließlich betrifft die Erfindung ein Verfahren zum Dosieren von Tee mit einer erfindungsgemäßen Kaffeemaschine.

Die Antriebsvorrichtung für die Förderschnecke wird dabei gesteuert.

Dadurch kann eine gewünschte Dosierung erfolgen. Zum Beispiel kann die Dosierung anhand der Anzahl an Umdrehungen der Förderschnecke und/oder der Zeit, z.B. der Laufzeit der Antriebsvorrichtung, erfolgen.

Alle hier beschriebenen Ausführungsformen und Bauteile der Vorrichtung sind vorzugsweise dazu ausgebildet, z.B. mittels der Steuerungsvorrichtung, nach dem hier beschriebenen Verfahren betrieben zu werden. Ferner können alle hier beschriebenen Ausführungsformen der Vorrichtung sowie alle hier beschriebenen Ausführungsformen des Verfahrens jeweils miteinander kombiniert werden, vorzugsweise auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine Perspektivansicht einer Ausführungsform einer erfindungsgemäßen Kaffeemaschine,
- Fig. 2: eine Vorderansicht der Kaffeemaschine gemäß Fig. 1,
- Fig. 3: eine Schnittansicht gemäß der Linie A-A in Fig. 2,
- Fig. 4: eine Detailansicht gemäß des Bereichs B in Fig. 3,
- Fig. 5: eine Schnittansicht gemäß der Linie C-C in Fig. 4,
- Fig. 6: eine Perspektivansicht einer Ausführungsform eines Behälters eines erfindungsgemäßen Aufsatzes,
- Fig. 7: eine Perspektivansicht einer Ausführungsform eines erfindungsgemäßen Aufsatzes, und
- Fig. 8: eine Perspektivansicht einer Ausführungsform mehrerer Antriebsvorrichtungen des Aufsatzes gemäß Fig. 7.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Vorzugsweise können die Positionen und/oder die Anzahl an Behältern bzw. Antriebsvorrichtungen variieren. Ferner kann die Anzahl, Position und/oder Orientierung der Zuführvorrichtungen bzw. Förderschnecken variieren.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

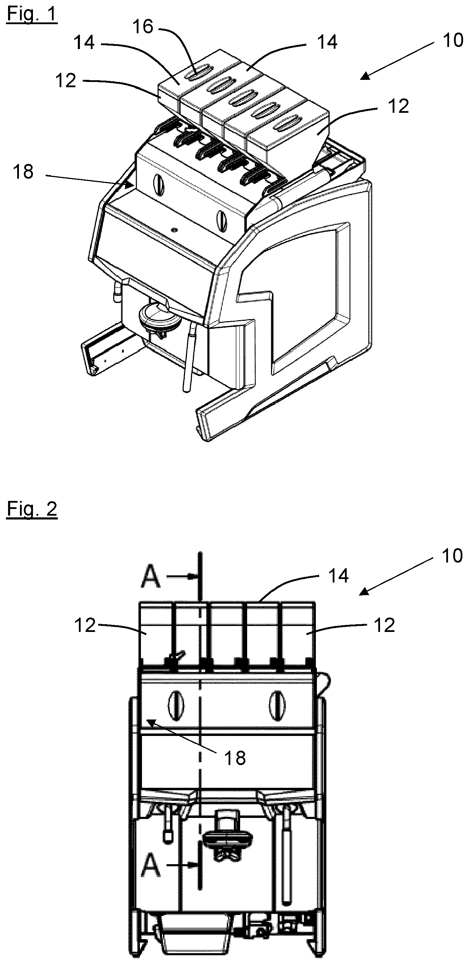

Fig. 1 und 2 zeigen eine Kaffeemaschine, vorzugsweise Kaffeevollautomat, mit einem Aufsatz 10.

Der Aufsatz 10 weist fünf Behälter 12 für Tee auf. Jeder Behälter 12 hat einen Deckel 14 mit einer optionalen Griffmulde 16.

Die Behälter 12 verjüngen sich beispielsweise trichterförmig nach unten hin.

Der Aufsatz 10 weist eine Befestigungsvorrichtung 18 zum Befestigen der Behälter 12 an der Kaffeemaschine auf. Beispielsweise kann der Aufsatz 10 formschlüssig in eine vorhandene Außenkontur der Kaffeemaschine gesteckt werden. Die Form des Aufsatzes 10 im Bereich der Außenkontur der Kaffeemaschine bildet hierbei die Befestigungsvorrichtung 18.

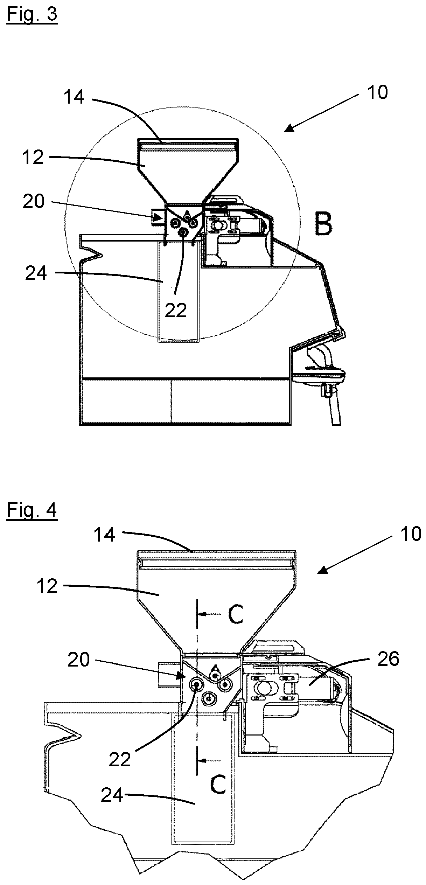

Wie in Fig. 3 bis 5 zu sehen ist, weist der Aufsatz 10 eine Zuführvorrichtung 20 mit mehreren horizontal orientierten Förderschnecken 22 zum Fördern des Tees von den Behältern 12 zu einem Zuführschacht 24 der Kaffeemaschine auf.

Die Förderschnecken 22 können, wie in Fig. 4 zu sehen ist, über Antriebsvorrichtungen 26 angetrieben werden.

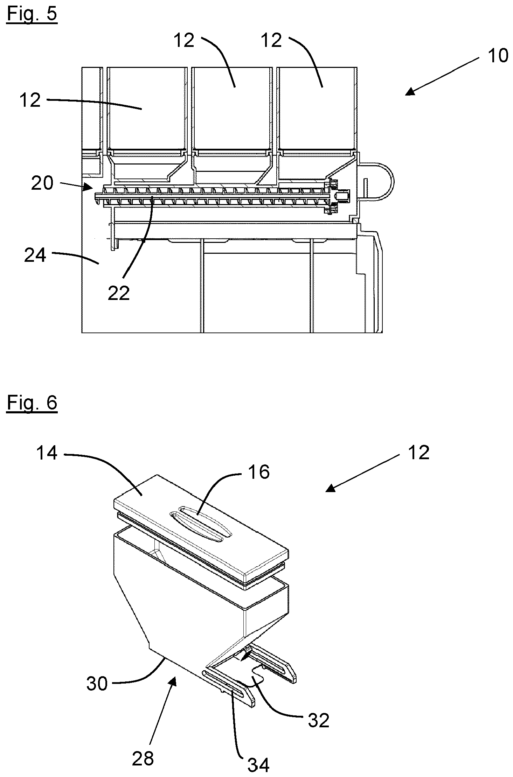

Fig. 6 zeigt einen Behälter 12 mit einem Deckel 14, der Griffmulden 16 aufweist.

An der Unterseite ist eine Behälterbefestigungsvorrichtung 28 vorgesehen, über die der Behälter 12 an der Zuführvorrichtung 20 befestigt werden kann.

Ein Auslass 30 an einer Unterseite des Behälters 12 kann über einen als Schieber 32 ausgebildeten Verschluss zumindest vorübergehend verschlossen werden.

Der Schieber 32 kann in einer Kulissenführung 34 geführt werden.

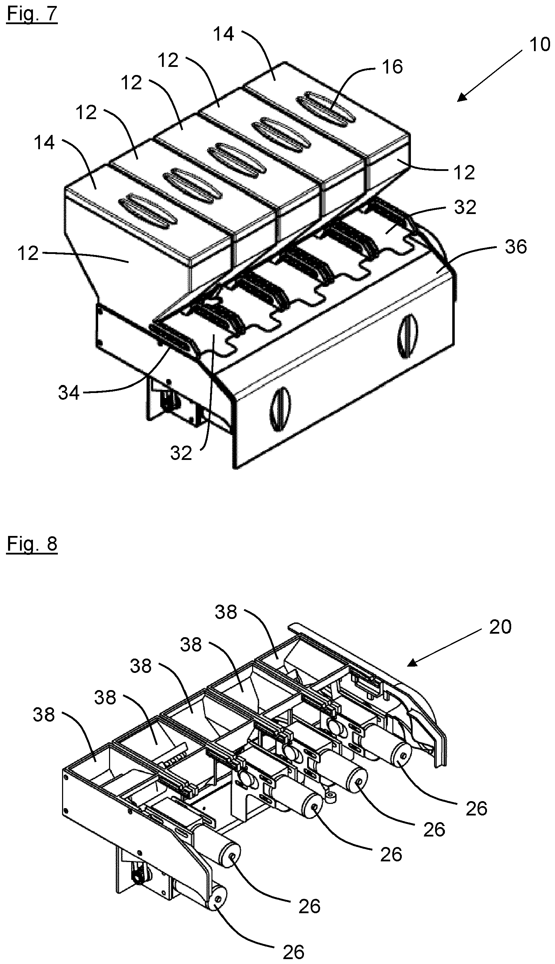

In der Ausführungsform, welche in Fig. 7 dargestellt ist, sind fünf Behälter 12 nebeneinander angeordnet. In den Behältern 12 können beispielsweise jeweils unterschiedliche Teesorten eingefüllt sein.

Die Behälter 12 können z.B. an einer Abdeckung 36 der Zuführvorrichtung 20 befestigt sein.

Die Abdeckung 36 deckt Antriebsvorrichtungen 26 der Zuführvorrichtung 20 ab.

Wie in Fig. 8 gezeigt ist, können die Behälter 12 z.B. auf, vorzugsweise trichterförmige, Aussparungen 38 der Zuführvorrichtung 20 aufgesetzt und/oder aufgesteckt werden.

Jedem Behälter 12 bzw. jeder Förderschnecke 22 ist eine separate Antriebsvorrichtung 26 zugeordnet. So wird ein individuelles Dosieren bzw. Fördern des in den Behältern 12 befindlichen Tees ermöglicht.

### Bezugszeichenliste

- 10: Aufsatz
- 12: Behälter
- 14: Deckel
- 16: Griffmulde
- 18: Befestigungsvorrichtung
- 20: Zuführvorrichtung
- 22: Förderschnecke
- 24: Zuführschacht
- 26: Antriebsvorrichtung
- 28: Behälterbefestigungsvorrichtung
- 30: Auslass
- 32: Schieber, Verschluss
- 34: Kulissenführung
- 36: Abdeckung
- 38: Aussparung

## Patentansprüche

1. Aufsatz (10) für eine Kaffeemaschine, vorzugsweise Kaffeevollautomat, aufweisend
wenigstens einen Behälter (12) für Tee,
eine Befestigungsvorrichtung (18) zum Befestigen des Aufsatzes (10) an und/oder auf der Kaffeemaschine, und
zumindest eine Zuführvorrichtung (20) mit wenigstens einer horizontal oder in Förderrichtung schräg nach unten orientierten Förderschnecke (22) zum Fördern des Tees vom Behälter (12) zur und/oder in die Kaffeemaschine.

2. Aufsatz nach Anspruch 1,
**dadurch gekennzeichnet,**
**dass** die Befestigungsvorrichtung (18) zum lösbaren Befestigen des Aufsatzes (10) an der Kaffeemaschine ausgebildet ist.

3. Aufsatz nach Anspruch 1 oder 2,
**gekennzeichnet durch**
eine, vorzugsweise elektromagnetische, Antriebsvorrichtung (26) für die Förderschnecke (22).

4. Aufsatz nach Anspruch 3,
**gekennzeichnet durch**
eine Steuerungsvorrichtung, die dazu ausgebildet ist, die Antriebsvorrichtung (26) zu steuern.

5. Aufsatz nach einem der vorhergehenden Ansprüche,
**dadurch gekennzeichnet,**
**dass** mehrere Behälter (12) und mehrere Förderschnecken (22) vorgesehen sind, wobei jedem Behälter (12) wenigstens oder genau eine separate Förderschnecke (22) zugeordnet ist.

6. Aufsatz nach einem der vorhergehenden Ansprüche,
**dadurch gekennzeichnet,**
**dass** der Behälter (12) einen, vorzugsweise dichtschließenden, Deckel (14) aufweist.

7. Aufsatz nach einem der vorhergehenden Ansprüche,
**gekennzeichnet durch**
eine Behälterbefestigungsvorrichtung (18) zum, vorzugsweise lösbaren, Befestigen des Behälters (12) an der Zuführvorrichtung (20).

8. Aufsatz nach einem der vorhergehenden Ansprüche,
**dadurch gekennzeichnet,**
**dass** der Behälter (12) an seiner Unterseite einen Auslass (30) und einen Verschluss (32) zum vorübergehenden Verschließen des Auslasses (30) aufweist.

9. Kaffeemaschine, vorzugsweise Kaffeevollautomat, mit einem Aufsatz (10) nach einem der vorhergehenden Ansprüche.

10. Verfahren zum Dosieren von Tee mit einer Kaffeemaschine nach Anspruch 9, bei dem
eine Antriebsvorrichtung (26) für die Förderschnecke (22) gesteuert wird.
